# EUROPÄISCHE PATENTANMELDUNG

(11) **EP 1 477 908 A1**
(43) Veröffentlichungstag der Anmeldung: **17.11.2004**
(21) Anmeldenummer: 03010802.1
(22) Anmeldetag: 14.05.2003
(51) Int. Cl.: G06F 17/30

(54) **Kommunikationssystem sowie Verfahren zum verbesserten Nutzen eines elektrischen Gerätes**

(71) Anmelder: Beck, Wilfried, 65191 Wiesbaden (DE)
(72) Erfinder: Beck, Wilfried, 65191 Wiesbaden (DE)
(74) Vertreter: Quermann, Helmut, Dipl.-Ing.

(57) **Zusammenfassung**

Die Erfindung schlägt ein Kommunikationssystem vor, mit mindestens einem elektrischen Gerät (2), einem Server (1), wobei das Gerät mit dem Server vernetzt ist, auf dem Server relevante Daten des Geräts abgebildet sind sowie der Server mittels Internet mit einem Call-Center (5) verbindbar ist. Auf Anforderung besitzt das Call-Center Zugang zum Server bzw. dem Gerät, so dass durch externe Aktivität des Centers ein gewünschter Zustand des Gerätes herbeigeführt werden kann.

## Beschreibung

Die Computertechnik ermöglicht es, elektrische Geräte so auszustatten, dass sie die unterschiedlichsten Funktionen aufweisen und demzufolge einen umfassenden Nutzen für den Anwender bieten können. In aller Regel wird der Nutzer diese unterschiedlichen Anwendungsmöglichkeiten nicht nutzen können, weil hierfür ein sehr komplexes Verständnis des Gerätes erforderlich ist. Da die jeweiligen Anwendungen nur selten gebraucht werden, ist dem Nutzer diese Kenntnis nicht geläufig. Bedienungshandbücher sind oftmals nur sehr schwer verständlich und bedingen, dass der Nutzer auf vielfältige Anwendungsmöglichkeiten seines Gerätes verzichtet.

Insbesondere kann der Anwender kaum die von der Industrie anvisierten Automatisierungsaufgaben betreffend den Einsatz von Geräten im Haus verstehen, geschweige denn Geräte entsprechend bedienen. Es wird ein Streit um die bestmögliche Bedien-Ergonomie mit unterschiedlichen Ansätzen - zu Lasten des Kunden - von den Herstellern bereits praktiziert, der zur Ablehnung der Technik führen kann. Dieser anwachsende "Technikfrust" und die finanziell hohen Aufwendungen für die einzelnen Automatisierungslösungen sorgen für eine sehr verzögerte Umsetzung. Abgesehen hiervon müssen regelmäßige Unterhalts- und Wartungskosten von jedem Hersteller dem Kunden neu verkauft werden und führen speziell in Privathaushalten zur schnellen Ablehnung.

Aus der DE 100 56 490 A1 ist ein Verfahren und eine Vorrichtung zur Bereitstellung von Gebrauchsanleitungen für Hausgeräte bekannt. Um eine verbesserte Versorgung von Kunden mit Gebrauchsanleitungen für Hausgeräte zu schaffen wird vorgeschlagen, dass eine Meldung zur Anforderung einer aktuellen Gebrauchsanleitung von einem an ein verteiltes Netzwerk angeschlossenen Hausgerät aus an einen Dienstleister abgesendet und die Betriebsanleitung über das verteilte Netz an einen Standort des Hausgerätes empfangen wird. Der Nutzer des Gerätes erhält somit nur im konkreten Anforderungsfall eine aktuelle Gebrauchsanleitung, die exakt auf sein Gerät zutrifft. Hiermit ist aber immer noch der vorbeschriebene Nachteil verbunden, dass der Nutzer sich mühsam mit dem Inhalt der Gebrauchsanleitung auseinandersetzen muss. Zum Umsetzen der Gebrauchsanleitung ist unter Umständen ein recht hoher technischer Sachverstand erforderlich, über den nicht jeder Nutzer verfügt.

Aus der DE 100 56 491 A1 ist ein Verfahren und eine Vorrichtung zur Verbesserung von Wartung und Service an Hausgeräten bekannt. Es wird vorgeschlagen, dass eine Meldung zur Anforderung von Service und/oder Wartungspersonen von einem an ein Netzwerk angeschlossenen Hausgerät aus an einen Dienstanbieter abgesendet wird. Der Nutzer des Gerätes muss damit keine Unterlagen oder Verzeichnisse von Service-Telefonnummern mehr konsultieren, da die erste Ansprechstelle für den Service das Hausgerät selbst ist. Von einer Servicestelle oder einem zuständigen Kundendienst aus kann eine Ferndiagnose an dem Hausgerät über das Netzwerk gestartet werden. Damit entfallen alle Fragen zu den Symptomen einer Störung an den Kunden selber, und der Kundendienst kann bedarfsgerecht und optional auf den Kundendiensteinsatz vorbereitet werden. Notfalls können bei der Planung eines Kundendiensteinsatzes auch nicht vorrätige Teile beim Hersteller angefordert werden.

Aufgabe der Erfindung ist es, ein Kommunikationssystem sowie ein Verfahren zum verbesserten Nutzen eines elektrischen Gerätes zu schaffen, das es dem Nutzer des Geräts ermöglicht, kompetente Hilfe betreffend die Nutzung des Geräts zu erhalten.

Die Erfindung schlägt ein Kommunikationssystem vor, mit mindestens einem elektrischen Gerät, einem Server, wobei das Gerät mit dem Server vernetzt ist, auf den Server relevante Daten des Geräts abgebildet sind, sowie der Server mittels Internet mit einem Call-Center verbindbar ist.

Das Call-Center kann auch nach dem Intranet-Prinzip arbeiten und als geschlossenes System Verbindungen an zum Beispiel Hotel-Concierge oder Familienmitglied im Büro herstellen. Die Daten auf dem Server liegen in der Verfügbarkeit des technischen Geräteinhabers, das heißt Kunden.

Wesentlich ist bei dem erfindungsgemäßen Kommunikationssystem somit, dass nicht nur der Nutzer unmittelbar Zugriff zu dem elektrischen Gerät hat und dieses bestimmungsgemäß, somit im Rahmen aller möglichen Bedienungen nutzen kann, sondern dass ein externer, kompetenter Dritter, vorliegend das Internet-Call-Center gleichfalls Zugriff zum Gerät bzw. über den Server zum Gerät hat. Fühlt sich der Nutzer des Gerätes mit einer Bedienfunktion überfordert, braucht er nicht umständlich in Bedienungsanleitungen blättern, sondern muss nur den Kontakt zum Internet-Call-Center aufnehmen. Dort erhält er kompetente Hilfe, indem der dort angetroffene kompetente Ansprechpartner entweder angibt, welche Bedienschritte der Nutzer unmittelbar herbeiführen muss, um zum gewünschten Ziel zu gelangen, oder aber die kompetente Person im Internet-Call-Center diese Schritte unmittelbar durch Zugriff auf den Server bzw. das Gerät herbeiführt. In diesem, letztgenannten Fall braucht der Nutzer gegenüber dem Internet-Call-Center nur seine Wünsche äußern, die durch dieses erfüllt werden.

Durch diese Verlagerung der auszuführenden Vorgänge auf das Internet-Call-Center können komplexe Funktionen ohne Einarbeitung, d.h. ohne sich mit einem Handbuch beschäftigen zu müssen, umgesetzt werden, nämlich Funktionen wie Musik und Musikbestellung, E-Mail, Alarm, Haustechnik, Terminerinnerung, beispielsweise Wecken, medizinische Alarme usw.. Dies ist durchgängig möglich durch die gesamte Hausautomatisierung. Durch dieses Kommunikationssystem wird der Kunde emotional motiviert, ein Hausnetzwerk installieren zu lassen. Die dabei gewonnene Infrastruktur kann von der Hausautomatisierung genutzt werden. Anfallende Unterhalts- und Wartungskosten für das Netzwerk und die Bedienung werden dann diesem täglich benutzten Bereich zugerechnet und vom Nutzer leichter akzeptiert.

Bei dem erfindungsgemäßen Kommunikationssystem wird somit auf Anforderung des Nutzers der Server mittels Internet mit dem Call-Center verbunden. Das Internet-Call-Center kann über das Internet auf den Server und/oder das Gerät zugreifen.

Bei dem mit dem Server vernetzten elektrischen Gerät kann es sich um jegliches elektrisches Gerät handeln, wobei hierunter auch ein bewegliches elektrisches Gerät verstanden wird. Gedacht ist beispielsweise an Handys oder elektrische Geräte in einem Fahrzeug, insbesondere in einem Auto. Das Kommunikationssystem ermöglicht es dem Nutzer, kompetente Hilfe betreffend die Nutzung dieses elektrischen Gerätes zu erhalten. Der Server kann sich durchaus im Gerät direkt befinden. Der Server kann sich durchaus auch an beliebiger Stelle im Internet befinden. Es ist denkbar, dass der Server aufklebbar ist, beispielsweise kann er unmittelbar auf dem Gerät aufgeklebt sein. So ist es denkbar, statt eines am Gerät angebrachten Barcodes den Server vorzusehen. Der Begriff des Call-Centers ist umfassend zu verstehen. Ansprechpartner bei dem Call-Center kann eine Person oder ein Sprach-Automat sein. In diesem Sinne ist es denkbar, dass der erste Kontakt zum Internet-Call-Center mit einem Sprach-Automat des Call-Centers herbeigeführt wird und nur dann, wenn der Sprach-Automat die Bedürfnisse des Nutzers nicht befriedigen kann, statt der Roboterstimme eine Person mit dem Nutzer kommuniziert.

In der einfachsten Ausführung ist der Server als Black-Box-Server ausgebildet. An ihn können die unterschiedlichsten Geräte angeschlossen sein. Bei einer Musikanlage sind dies beispielsweise den einzelnen Zimmern zugeordnete Room-Displays, die insbesondere Lautsprecher, Anzeigen und Eingabetastaturen aufweisen. Eine Taste ist insbesondere vorgesehen, um die Verbindung von Server und Internet-Call-Center auf Anforderung des Nutzers herzustellen. Diese Taste hat somit die Funktion einer "Hilfe-Taste". Über den Lautsprecher, der üblicherweise der Wiedergabe der Musik dient, sowie ein Mikrophon, kann beim Betätigen der Hilfetaste die Kommunikation mit dem Internet-Call-Center geführt werden. Eventuell unmittelbar am Room-Display vorzunehmende Einstellungen auf Anweisung des Internet-Call-Centers können über andere Eingabetasten vorgenommen werden, sofern diese Einstellungen nicht unmittelbar vom Internet-Call-Center aus erfolgen. Der Black-Box-Server ist beispielsweise mittels eines Modem mit dem Internet verbunden. Das Internet-Call-Center kann sich an einem beliebigen Ort der Erde befinden.

Bei Betätigen der "Hilfe-Taste" wird vorzugsweise das Handbuch sowie Anzeige und Tastatur des Gerätes, das bedient werden soll, über das Internet zum Service-Anbeiter weitergeleitet. Mit diesem kann der Nutzer insbesondere frei sprechen, der Service-Anbieter kann für ihn das Gerät bedienen.

Das Kommunikationssystem lässt sich erweitern, indem der Black-Box-Server nicht nur mit einem oder mehreren Room-Displays, sondern auch mit einem mit einer eigenen Software versehenen PC oder kabellos mittels Wireless LAN (WiFi) oder mit Laptop mit WiFi oder PDA mit WiFi verbunden ist. Bei Verwendung eines PC wird beispielsweise auf dessen Bildschirm der Room-Display transferiert. Entsprechendes gilt für die Verwendung des Laptop.

Das Kommunikationssystem lässt sich noch weiter erweitern, wenn der Server nicht als Black-Box ausgebildet ist, sondern eine offene Plattform darstellt. Ein solcher offener Computer hat gegenüber einer Black-Box den Vorteil, dass er manipuliert, somit entsprechend den konkreten Anforderungen nachbearbeitet werden kann.

Wie vorstehend dargelegt, ist die Erfindung nicht auf ein Kommunikationssystem im Zusammenhang mit einer Musikanlage, insbesondere einer Multiroom-Musikanlage auf IT-Basis für die moderne Hausautomatisierung beschränkt. Es kann sich um jedes beliebige elektrische Gerät handeln, beispielsweise eine Steuerung einer Haustechnik oder ein medizinisches Überwachungsgerät.

Die Erfindung schlägt ferner ein Verfahren zum verbesserten Nutzen eines elektrischen Gerätes vor, wobei relevante Daten des Gerätes über einen Server einem Internet-Call-Center zur Verfügung gestellt werden, derart, dass durch externe Aktivität des Internet-Call-Centers ein gewünschter Zustand des Geräts herbeigeführt werden kann. Dieser gewünschte Zustand des Gerätes kann durch unmittelbaren Zugriff des Internet-Call-Centers auf den Server und/oder das Gerät herbeigeführt werden oder aber durch den Nutzer des Geräts selbst, der die zum Erreichen des verbesserten Nutzen des elektrischen Geräts erforderlichen Informationen vom Internet-Call-Center erhält. Das Internet-Call-Center und der Nutzer kommunizieren bevorzugt verbal, es ist aber gleichfalls denkbar, dass die Informationen schriftbildlich oder ausschließlich durch Bilder oder Daten übermittelt werden.

Im Sinne der Erfindung ist es nicht erforderlich, dass die Kontaktaufnahme mittels einer Taste, die die Funktion einer "Hilfe-Taste" besitzt, erfolgt. Die Kontaktaufnahme kann beliebig erfolgen, beispielsweise auf einem Bildschirm per Mouseklick oder Tastendruck ausgelöst werden. Es ist auch denkbar, dass ohne Tastendruck oder dergleichen, somit automatisch der Kontakt zum Internet-Call-Center über das IP (Internet-Protokoll) hergestellt werden kann. Unter dem Aspekt der Automatisierung der Haustechnik wird diese Verbindung beispielsweise dann von allein herbeigeführt, wenn bei einer Heizungsanlage eine Fehlermeldung auftritt, z. B. wenn eine kritische Heiztemperatur überschritten worden ist. Diese Information wird im Internet-Call-Center zur Verfügung gestellt, dass dann auf das Gerät einwirkt oder einen Dritten informiert. Ein weiteres bevorzugtes Anwendungsgebiet ist unter diesem Aspekt die Brandmeldung durch Vernetzung eines elektrischen Brandmelders mit dem Internet-Call-Center. Es handelt sich somit um ein Kommunikationssystem, bei dem beim Eintreten bestimmter Umstände beim elektrischen Gerät über den Server und das Call-Center durch externe Aktivität des Call-Centers eine automatische Reaktion erfolgt.

Weitere Merkmale der Erfindung sind in den Unteransprüchen, der Beschreibung der Figuren und den Figuren selbst dargestellt, wobei bemerkt wird, dass alle Merkmale sowie Kombinationen von Merkmalen erfindungswesentlich sind.

In den Figuren ist die Erfindung anhand mehrerer Ausführungsformen für den Anwendungsbereich einer Multiroom-Musikanlage auf IT-Basis für die moderne Hausautomatisierung dargestellt, ohne hierauf beschränkt zu sein. Es zeigt:
- Figur 1: eine sehr einfache Ausführung des erfindungsgemäßen Kommunikationssystems unter Verwendung eines Black-Box-Servers,

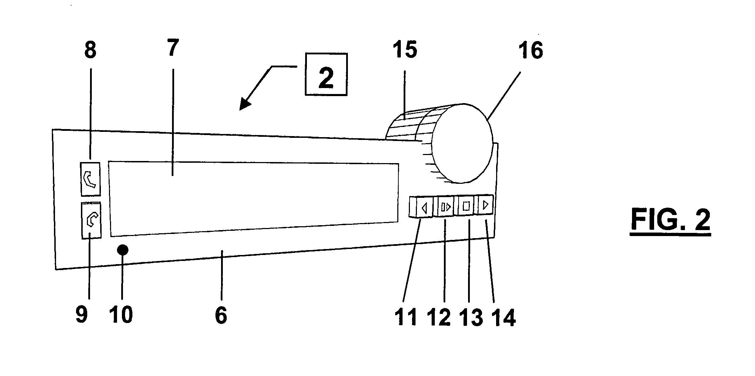

- Figur 2: eine Darstellung der in Figur 1 gezeigten Room-Displays,
- Figur 3: ein gegenüber der Ausführungsform nach Figur 1 erweitertes Kommunikationssystem, nach wie vor unter Verwendung eines Black-Box-Servers,
- Figur 4: ein gegenüber den Ausführungsformen nach den Figuren 1 und 3 erweitertes Kommunikationssystem unter Verwendung eines offenen Computers und
- Figur 5: ein Kommunikationssystem gemäß Figur 4 mit veranschaulichtem Grundmodul zum Anschließen unterschiedlicher Geräte.

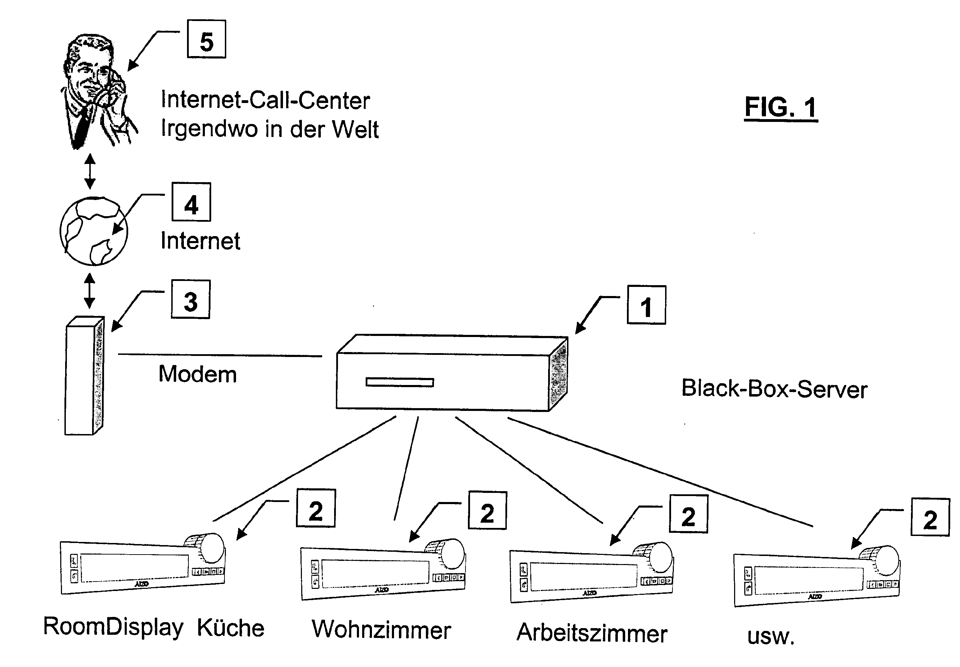

Das Kommunikationssystem nach Figur 1 weist einen Black-Box-Server 1 auf, an den Room-Displays 2 angeschlossen sind, die insbesondere in der Küche, dem Wohnzimmer, einem Arbeitszimmer des Hauses usw. angeordnet sind. Der Black-Box-Server 1 steht mit einem Modem 3 in Verbindung, das mittels Internet 4 die Verbindung zu einem Internet-Call-Center 5 herstellt, das sich irgendwo in der Welt befindet.

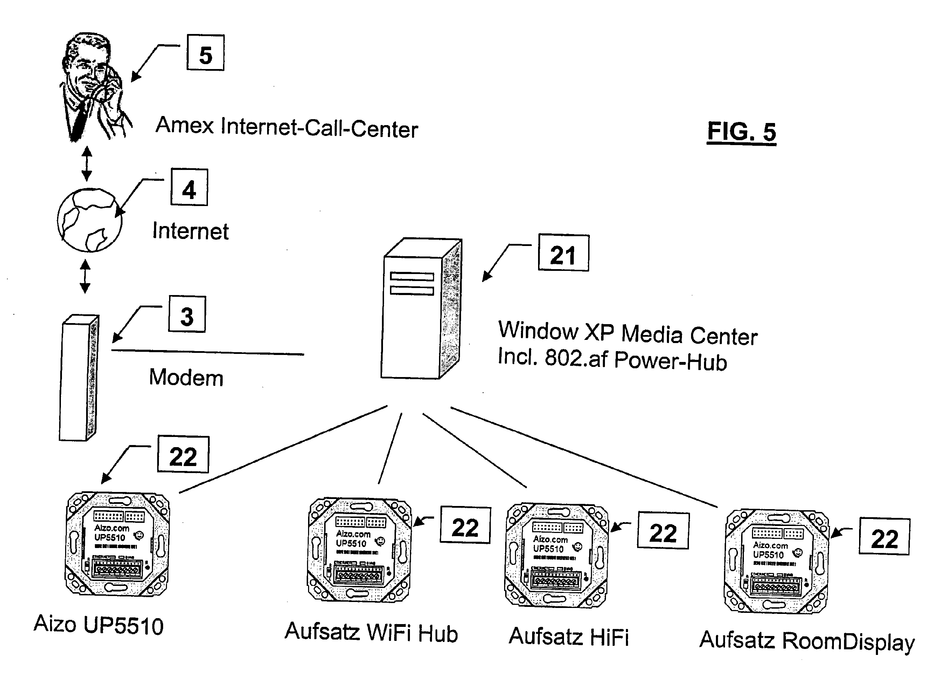

Figur 5 veranschaulicht den Aufbau des jeweiligen Room-Displays 2: In ein Gehäuse 6 ist ein Grafik-Display 7 integriert. Das Gehäuse 6 ist ferner mit einer Hilfetaste 8, einer Taste 9 zum Beenden des Gespräches sowie einem Mikrofon 10 versehen. Im Zusammenhang mit der Darbietung von Musik ist eine Taste 11 mit der Funktion "Zurück", eine Taste 12 mit der Funktion "Play-Pause", eine Taste 13 mit der Funktion "Stop" und eine Taste 14 mit der Funktion "Weiter" in das Gehäuse 6 integriert. In diesem sind ferner ein Lautsprecher 15 und ein Lautstärke- und Auswahldrehknopf 16 gelagert.

Basisfunktionen des Room-Displays sind beispielsweise:
- Multiroom-Musikanlage und Jukebox mit beliebig vielen CDs, auswählbar nach Künstlern, Album, Genre, Titel und Lieblingssongs mit "Playlisten"
- Party-Betriebsart zum Spielen derselben Musik in allen Räumen
- kompaktes Design, Front wie Autoradio, aber flach wie ein Bild
- Internet-Radio über tausend Sender aus der gesamten Welt
- eingebauter Minilautsprecher und Stereoanlagenanschluss

Sonderfunktionen des Room-Displays sind insbesondere:
- eingebaute Hilfe-Taste zum Verbinden mit Internet-Call-Center
- Fernbedienung mit weiteren Funktionen
- eingebaute Internet-Atom-Uhr mit Weckfunktion
- Vorbereitung für Internet-Telefonie
- Temperatur-, Feuchte- und Lichtsensor
- Stromversorgung über Datenkabel.

Denkbare Optionen des Room-Displays sind beispielsweise:
- Kopfhöreranschluss
- Nahbereichsfunk Bluetooth für PDA, Laptop, Headset oder Medizintechnik
- Funkverbindung zu Funklautsprechern
- Lichtsteuerung über Room-Display und Fernbedienung
- eHome Steuerung über Room-Display, Fernbedienung oder PDA
- Ladestation und Sync-Station für Handy oder PDA
- E-Mail Empfang oder Vorlesen
- Steuern von Outlook über Stimme

Aufgrund der Hilfetaste 8 ist folgendes Szenario denkbar: Der Nutzer des Gerätes bzw. Room-Displays betätigt die Hilfetaste 8. Das Betätigen der Hilfetaste erzeugt einen Anruf beim Internet-Call-Center ohne unmittelbare Telefonkosten, da er über "Internetfreisprechen" erfolgt und benötigt überdies keine Identifikation für Grundfunktion, da über "Room-Display" identifiziert wird. Das Internet-Call-Center meldet sich beispielseise: "Guten Tag, Haus von Familie ..., wie kann ich Ihnen helfen?". Antwort aus dem Haus von Familie ... beispielsweise: "ich komme mit meiner Raummusikanlage nicht klar ... was muss ich machen, um Madonna zu spielen?". Antwort des Internet-Call-Centers beispielsweise: "soll ich Madonna für Sie suchen und starten oder Ihnen Schritt für Schritt assistieren?". Dies ist möglich, da die Displays 2 komplett im Black-Box-Server 1 abgebildet sind und gleichzeitig beim Internet-Call-Center Bildschirm und das Display gesehen und bedient werden können. Hierdurch lassen sich an den Server 1 angeschlossene Dienste einfachst über das Internet-Call-Center 5 in Anspruch nehmen.

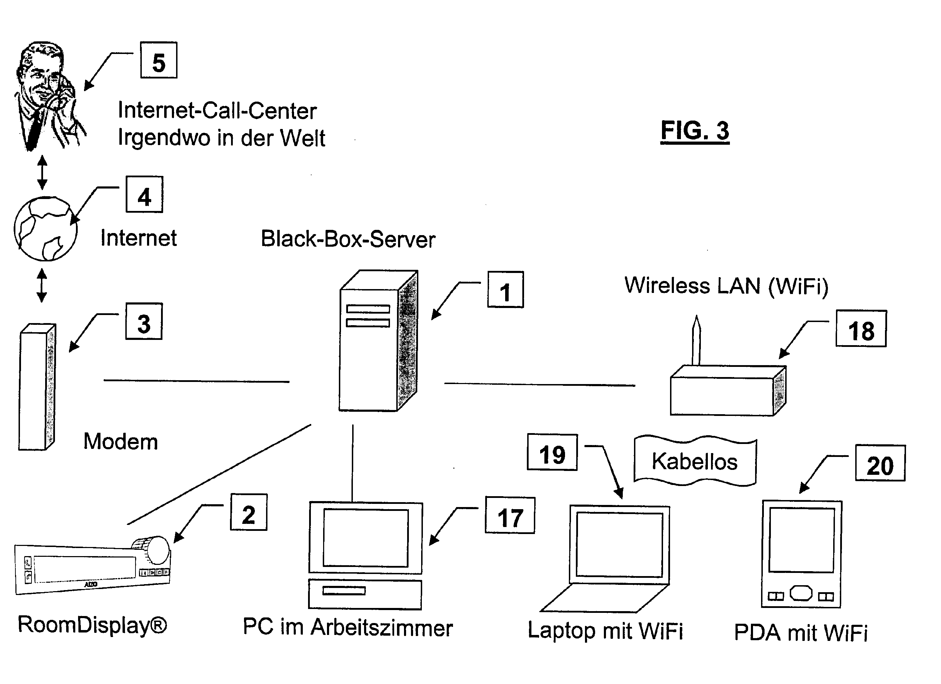

Der Ausführungsform nach der Figur 3 ist zu entnehmen, dass nicht nur ein oder mehrere Room-Displays 2 an den Black-Box-Server 1 angeschlossen sind, sondern auch ein PC 17, beispielsweise im Arbeitszimmer sowie kabellos ein Wireless LHN (WiFi) 18 sowie ein Laptop mit WiFi 19 und ein PDA mit WiFi 20.

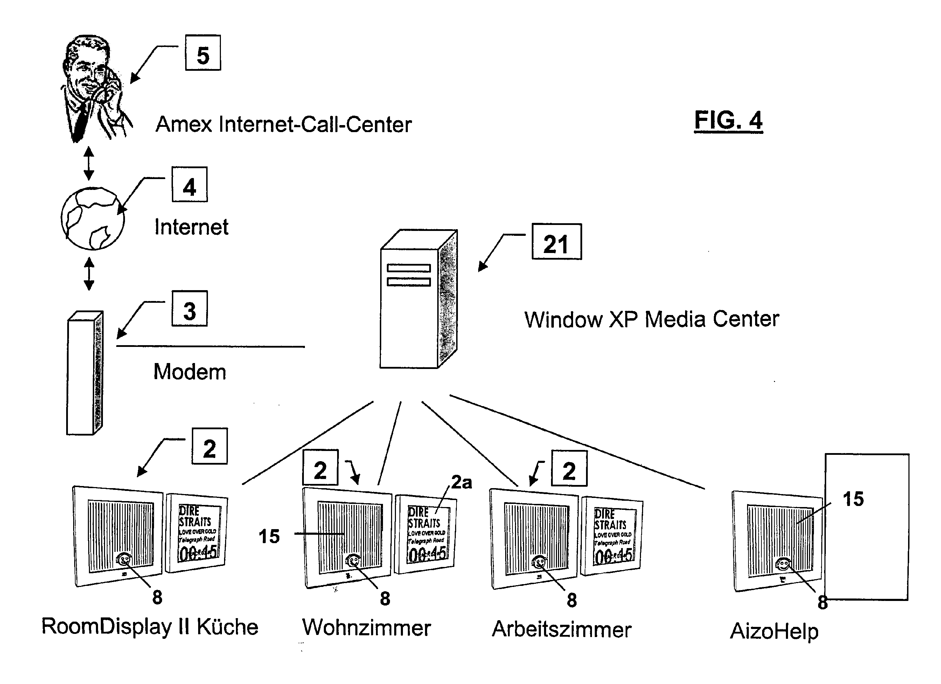

Bei der Ausführungsform nach Figur 4 ist statt eines Black-Box-Servers 1 ein offener Computer 21, beispielsweise ein Window XP Mediacenter vorgesehen, der über das Modem 3 und Internet 4 mit dem Internet-Call-Center 5 in Verbindung steht. Der Computer 21 ist mit diversen anders gestalteten Room-Displays 2 verbunden, die beispielsweise in der Küche, dem Wohnzimmer und einem Arbeitszimmer angeordnet sind und die jeweils eine Hilfetaste 8 aufweisen. Zum jeweiligen Room-Display 2 ist das eigentliche Display 2a verdeutlicht, sowie der Lautsprecher 15 mit der in diesen integrierten Hilfetaste 8. Durch Betätigen dieser Taste kann im aufgezeigten Sinne der Kontakt mit dem Internet-Call-Center 5 aufgenommen werden. Rechts ist in Figur 4 eine Modifizierung gezeigt, bei der gegenüber dem Room-Display 2 nach dieser Figur auf das eigentliche Display 2a verzichtet worden ist und demzufolge nur der Lautsprecher 15 mit Hilfetaste 8 vorgesehen ist.

Die Ausführungsform nach der Figur 5 stimmt mit der Ausführungsform nach der Figur 4 hinsichtlich der Anbindung des Computers 21 an das Internet-Call-Center 5 überein. Im Unterschied zur Ausführungsform nach Figur 4 sind in Figur 5 die Verbindungen des Computers 21 zu aus dem Stand der Technik bekannten Grundmodul-Unterputzdosen dargestellt, die Anschlüsse für die vorstehend beschriebenen Funktionen und insbesondere denkbaren Optionen aufweisen. Auf diese Unterputzdosen 22 werden beispielsweise die unterschiedlichen Displays aufgesteckt.

Gemäß einer Weiterbildung der Erfindung kann auch in einer zur Steuerung der Hilfetaste 8 vorgesehenen Fernbedienung eine Hilfetaste vorgesehen sein, die die Verbindung zum Internet-Call-Center 5 herstellt und dann sogar ein Telefonieren über die Fernbedienung - durch Vermittlung -ermöglicht.

## Patentansprüche

1. Kommunikationssystem, mit mindestens einem elektrischen Gerät (2, 17, 18, 19, 20), einem Server (1, 21), wobei das Gerät (2, 17, 18, 19, 20) mit dem Server (1, 21) vernetzt ist, auf dem Server (1, 21) relevante Daten des Geräts (2, 17, 18, 19, 20) abgebildet sind, sowie der Server (1, 21) mittels Internet (4) mit einem Call-Center (5) verbindbar ist.

2. System nach Anspruch 1, wobei der Server (1, 21) als Black-Box-Server (1) oder als offene Plattform (21), insbesondere offener Computer (21), ausgebildet ist.

3. System nach Anspruch 1 oder 2, wobei dem Server (1, 21) eine Vielzahl Geräte (2, 17, 18, 19, 20) zugeordnet sind.

4. System nach Anspruch 3, wobei das Gerät eine Musikanlage (2), beispielsweise Multiroom-Musikanlage mit Videoserver, und/oder ein Gerät der Haustechnik, beispielsweise eine Steuerung einer Hausheizung, und/oder ein medizinisches Gerät, beispielsweise ein medizinisches Überwachungsgerät ist.

5. System nach einem der Ansprüche 1 bis 4, wobei das Gerät ein PC (17), Laptop (19), PDA (20), Wireless LAN (18) oder Room-Display (2) ist.

6. System nach einem der Ansprüche 1 bis 5, wobei die Verbindung vom Server (1, 21) und Internet-Call-Center (5) mittels Betätigen einer Hilfe-Taste (8) des Geräts (2) erfolgt.

7. System nach einem der Ansprüche 1 bis 6, wobei die Anforderung an den Server (1, 21) unmittelbar per Kabel oder kabellos, insbesondere per Fernbedienung, erfolgt.

8. System nach einem der Ansprüche 1 bis 7, wobei die Kontaktaufnahme beim Call-Center (5) mit einer Person und/oder einem Sprach-Automaten erfolgt.

9. Verfahren zum verbesserten Nutzen eines elektrischen Gerätes (2, 17, 18, 19, 20), wobei relevante Daten des Gerätes (2, 17, 18, 19, 20) über einen Server (1, 21) einem Internet-Call-Center (5) zur Verfügung gestellt werden, derart, dass durch externe Aktivität des Internet-Call-Centers (5) ein gewünschter Zustand des Gerätes (2, 17, 18, 19, 20) herbeibeführt werden kann.

10. Verfahren nach Anspruch 9, wobei der gewünschte Zustand des Geräts (2, 17, 18, 19, 20) unmittelbar durch Einwirken des Internet-Call-Centers (5) auf den Server (1, 21) und/oder das Gerät (2, 17, 18, 19, 20) herbeigeführt werden kann.

11. Verfahren nach Anspruch 9 oder 10, wobei das Internet-Call-Center (5) den Nutzer des Geräts (2, 17, 18, 19, 20) informiert und der Nutzer aufgrund der gegebenen Information den gewünschten Zustand des Geräts (2, 17, 18, 19, 20) herbeiführt.

12. Verfahren nach einem der Ansprüche 9 bis 11, wobei das Internet-Call-Center (5) und der Nutzer per Sprache, Schrift und/oder Bild kommunizieren.
